# EUROPEAN PATENT APPLICATION

(11) **EP 4 257 817 A1**
(43) Date of publication of application: **11.10.2023**
(21) Application number: 23164614.2
(22) Date of filing: 28.03.2023
(51) Int. Cl.: F02K 9/46

(54) **LIQUID PROPELLANT SUPPLY ASSEMBLY FOR A ROCKET ENGINE**

(30) Priority: 05.04.2022 IT 202200006722
(71) Applicant: Finis Terrae S.r.l., 00128 Roma (IT)
(72) Inventor: BELLOMI, Paolo, 00128 ROMA (IT)
(74) Representative: Studio Torta S.p.A.

(57) **Abstract**

A combustion chamber (5) of a rocket engine (35) for a spacecraft is supplied with one or more liquid propellants stored in corresponding containing tanks (10, 37) under low pressure and moved toward the combustion chamber (5) by corresponding dosing rotary volumetric pumps (18, 38) under the control of a command, control, and synchronisation unit (22) configured to vary the rotation speed of each dosing rotary volumetric pump (18, 38) and to supply a flow of each propellant, which can be varied according to a required rocket engine operating profile, into the combustion chamber (5) .

## Description

### CROSS-REFERENCE TO RELATED APPLICATIONS

This patent application claims priority from Italian patent application no. 102022000006722 filed on April 5, 2022, the entire disclosure of which is incorporated herein by reference.

### TECHNICAL FIELD

This invention relates to a liquid propellant supply assembly for a rocket engine.

In the field of space propulsion, both as the primary propulsion of launch vehicles, and as secondary propulsion, such as, for example, controlling the attitude or orbital control, the use of liquid propellant rocket engines supplied with just one liquid propellant or with a combination of several liquid propellants is widely known.

Irrespective of the fact that the rocket engine is supplied with a single liquid propellant or with a combination of several liquid propellants, the specific impulse and thrust greatly depend on the dosing of the single liquid propellant or the combination of several liquid propellants.

### BACKGROUND

In known propulsion assemblies or systems, the dosing at the inlet to the combustion chamber is solely a function of the pressurisation of the individual liquid propellant/s injected inside the combustion chamber.

Again, in known propulsion assemblies, the pressurisation of the liquid propellant/s and the supply to the combustion chamber is obtained, in some cases, by using pumping systems using centrifugal turbopumps or alternative piston pumps.

The known pumping systems receive the respective liquid propellant/s from pressurised tanks under variable pressures depending on the propellant's vapour pressure, normally in the order of 2-7 bar.

Above all, in the use of turbopumps, the pressurisation of the tanks is indispensable for avoiding cavitation and, in general, the formation of propellant vapours that, if present, would irreparably damage the rotors.

Alternatively, the different liquid propellant/s are inserted and pressurised inside the respective, separate tanks and are injected, by these, into the combustion chamber via dosing circuits in which the control of the flow occurs by modulating the pressure loss between the pressurised propellant and the injection system through valves or openings.

In both cases, the control of the quantity of propellant to be injected into the combustion chamber is an "indirect" control since it is unequivocally a direct function of the pressure of the propellant or of the propellant mixture upstream of the combustion chamber. In the turbopumps, the pressure of the propellant is that resulting from the force transmitted to the propellant by centrifugal force. It follows that controlling the flow in these conditions proves to be complex, in some cases, and impossible to precisely implement in others. The supply units for space propulsion units are, therefore, not very satisfactory from this point of view, but especially difficult to control at the various speeds in which the rocket engine is required to operate.

If stationary, in fact, the accurate control of the flow may require complex compensation operations including with counteraction adjustments.

The behaviour of the rocket engine is not completely satisfying especially in transition conditions, such as, for example, the phases of ignition, thrust splitting, change in speed, and switching off, i.e., in all those conditions wherein the flow needs to be varied over time with high dynamics, and where the flow required is especially low, for example the use of propulsion for the transfer between two energetically continuous orbits.

The indirect control of the mass of the individual propellant or of a combination of several liquid propellants introduced individually into the combustion chamber does not enable accurate variation of the flow nor the raising of the control dynamics beyond certain limits.

As is known, the thrust splitting of a liquid propulsion unit is an essential element for success in many missions and, in particular, missions that involve continuous variations in the vehicle's acceleration such as, for example, in vertical or lunar landing, in some orbital plane or attitude change manoeuvres. In all the operating conditions a minimum level of pressure difference between the supply circuit and the combustion chamber, which prevents the backwards flow of combustion products between the chamber and injection and supply circuit elements, must be, in any case, ensured.

Generally, the splitting is obtained through the modulation of pressure losses immediately upstream of the injection system (for example, with valves, by-pass, or orifices) or through the increase of pressure losses inside the injector nozzles themselves (for example, via "pintle" injectors) and this enormously complicates the propellant supply and control system.

In any case, the need to comply with a minimum pressure difference criterion leads to the deoptimization of the propulsion unit in different operating conditions, a significant increase in complexity, and, in some cases, loss of reliability.

Experimentally, it has been shown that, in transition conditions, the thrust profile may diverge a lot from the predefined thrust profile with resulting positioning and trajectory errors and a resulting difficulty in managing the flight in terms of guidance and control.

In addition, again experimentally, it has been proven that, in the case of supply via a combination of liquid propellants, the mixing ratio can vary in an uncontrolled way in transitions and be scarcely predictable and repeatable when stationary, with adverse consequences on the combustion performance and thermo-structural integrity of the combustion chamber.

In general, the above-mentioned, known supply systems make the Minimum Impulse Bit (MIB) that can be delivered by the propulsion system particularly high, so as to result in optimisation constraints for the guidance and control systems and to often prevent high-precision manoeuvres or positioning.

The Minimum Impulse Bit can be limited on known propulsion systems through systems with pressurised supply, for which the adduction of the propellant is controlled by opening and closing the flow control valve/s, which must have a specific dynamic without the use of propellants for regenerative cooling.

In short, the measures that reduce the Minimum Impulse Bit significantly worsen the inert mass of the propulsion system, while the systems optimised in terms of Specific Impulse are not suitable for splitting, the transient stages are dispersed and not easily controllable, with adverse effects on the thrust and structural integrity of the combustion chambers.

In addition to this, the supply system using pressurised propellant tanks that, moreover, is widely used in almost all satellite propulsion systems, is often penalising in terms of inert masses of the propulsion system. In fact, the pressurised tanks are tanks structured to resist the action of even high pressures and, inevitably, are heavy and have predefined shapes and are not easy to alter in terms of their dimensions, as well as being particularly hazardous, especially in space applications.

The use of alternative pumping systems, though having advantages over turbopumps, is not very satisfactory since, inevitably, it generates periodic changes in pressure in the combustion chamber with resulting dynamic disturbances on the thrust and combustion stability risks.

These problems are often compensated for by using pressurised compensation tanks and controlled valve assemblies that, however, increase the weight and costs, and reduce the space inside the rocket engine.

Again, in the multipropellant supply systems, the control of the mixing ratio is complicated and, in any case, always has imprecisions and variabilities such as to prevent the achievement of an optimal specific impulse, so that a significant fraction of propellant is unusable, and risks are created for the thermo-structural integrity of the combustion chamber.

In any case, obtaining a defined mixing ratio is subordinate to the use of calibrated orifices and/or complex valves.

### SUMMARY

The purpose of this invention is to provide a liquid propellant supply assembly for a rocket engine, which resolves the drawbacks described above in a simple and inexpensive manner.

One particular purpose of this invention is to provide a multipropellant supply assembly, which enables a precise and continuous command and control of the rocket engine, whatever the operating condition of the rocket engine is.

According to this invention, a liquid propellant supply assembly for a rocket engine is provided, as claimed in claim 1.

This invention also relates to a propulsion assembly for a rocket engine.

According to this invention, a propulsion assembly of a rocket engine, as claimed in claim 10, is provided.

### BRIEF DESCRIPTION OF THE DRAWINGS

The invention will now be described with reference to the accompanying drawings, illustrating a non-limiting embodiment thereof, in which:
Figure 1 illustrates, schematically and basically in blocks, a rocket engine provided with a first, preferred embodiment of a liquid propellant propulsion assembly produced according to the precepts of this invention;
Figure 2 is similar to Figure 1 and illustrates a second, preferred embodiment of the liquid propellant propulsion assembly according to this invention;
Figure 3 is similar to Figure 2 and illustrates a third, preferred embodiment of a liquid propellant propulsion assembly according to this invention; and
Figure 4 is similar to Figure 3 and illustrates an alternative embodiment of a detail in Figure 3.

### DESCRIPTION OF EMBODIMENTS

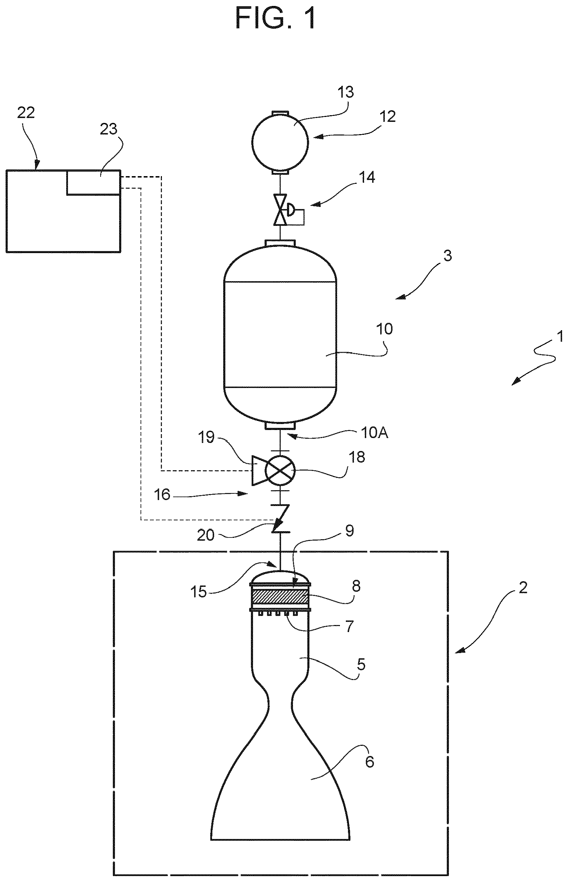

In Figure 1, the reference number 1 indicates, as a whole, a rocket engine for application in space missions.

The rocket engine 1 comprises a propulsion assembly 2 and a supply assembly 3 for supplying a liquid propellant to the propulsion assembly 2. Here and below, the term "liquid propellant" means a liquid or gel propellant.

The propulsion assembly 2 comprises, in turn, a combustion chamber 5 for the propellant and a known convergent-divergent nozzle 6 configured to generate a useful propulsion thrust when traversed by gases generated inside the combustion chamber 5.

Inside the chamber 5, the propulsion assembly comprises one or more dispensing injector nozzles 7, which are known and schematically illustrated, and a catalytic block 8 for decomposing propellant, which is also known and arranged in a decomposition pre-chamber 9. According to one variant, the catalytic block 8 and the chamber 9 may be absent.

Again, with reference to Figure 1, the supply assembly 3 is of the monopropellant type and comprises a tank 10 containing the propellant at almost zero pressure or at a minimum pressure basically equal to or close to the vapour pressure of the propellant that, according to the propellant used, may vary between 1 and 10 bar.

When necessary, the minimum pressurisation of the propellant inside the tank is obtained using a pressurising device 12 comprising a tank 13 containing a pressurising gas at a pressure varying between 50 and 900 bar and a pressure regulator 14 placed between the tank 13 and a pressurising inlet of the tank 10.

Again with reference to Figure 1, between one outlet 10A for the propellant from the tank 10 and an inlet 15 for the propellant in the injector nozzles or in the combustion chamber 5 for the propellant, the supply assembly 3 comprises, in addition, a pipe 16 along which, in the propellant's forward direction, a dosing rotary volumetric pump 18 is arranged that is driven by a motor 19, for example an electric or pneumatic one. The pump 18 is conveniently, but not necessarily, a volumetric screw pump, for example a Circor Allweiler EMTEC-C pump, suitable for use in space applications.

Downstream of the pump 18, there is a check valve 20 for preventing the return of the propellant and of the combustion products into the tank 10 as a result of possible pressure increases inside the combustion chamber 5 and to stop the outflow of the propellant from the tank 10.

Again, with reference to Figure 1, the supply assembly 3 comprises, finally, a command and control unit 22 for dosing the propellant inside the combustion chamber 5. To this end, the unit 22 is connected to the motor 19 of the pump 18 and to the valve 20 and comprises a command and control block 23 of the motor 19 and of the valve 20 depending on the desired operating profile of the rocket engine 1. In other words, the unit 23 controls the rotation conditions of the motor 19 and, thus, of the pump 18, so as to supply a defined and predetermined dosed mass of propellant to the combustion chamber 5 in each operating instant of the rocket engine 1, i.e., as a function of the instantaneous value of thrust required by the rocket engine 1 itself.

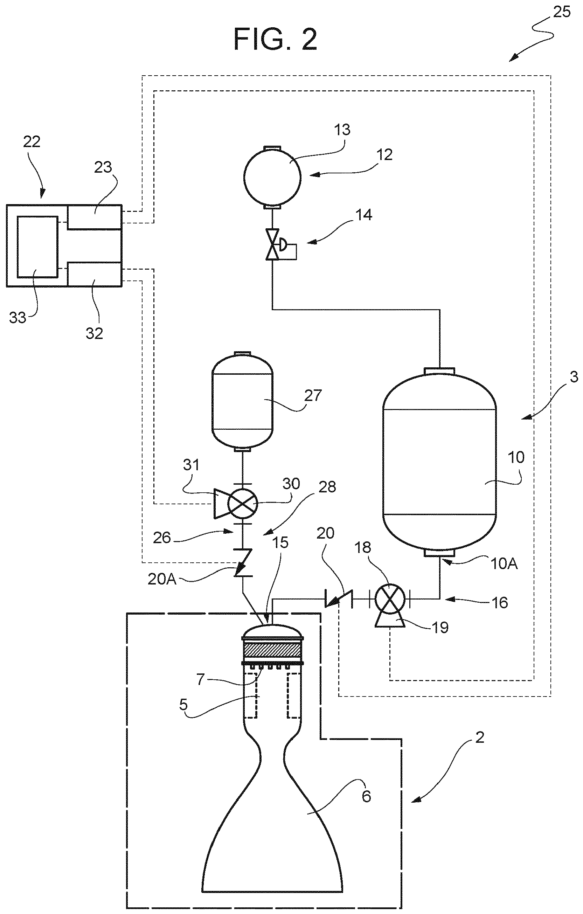

Figure 2 illustrates a rocket engine 25, which differs from the rocket engine 1 due to the fact that the supply assembly 3 also comprises an ignition device 26 for the propellant inside the combustion chamber 5. This has the function of creating, in the combustion chamber, the thermo-dynamic conditions for a fast dissociation, in the case of a monopropellant system, or for combustion, in the case of a hybrid propulsion system, in which one propellant is liquid and another fuel, for example in the solid state or, more generally, a non-hypergolic multipropellant.

The ignition device 26 comprises, in turn, a tank 27 containing an ignition fluid for a propellant, normally in the liquid state. Inside the tank 27, the ignition fluid is pressurised at a pressure that may vary between the vapour pressure and 3 bar. The ignition fluid may be hypergolic (for example, pyrophoric), for example Triethylaluminum-Triethylborane, or not; in the latter case, the flow will be heated by an electric system (not illustrated) like a spark plug or glow plug.

One outlet of the tank 27 communicates with the combustion chamber 5 through a pipe 28, along which and in the forward direction of the ignition fluid, a dosing rotary volumetric pump 30 is arranged, and a check valve 20A equal to the valve 20.

Like the pump 18, another pump 30 is also, conveniently, but not necessarily, of the screw type and is driven by its own motor 31, for example an electric or pneumatic one, commanded and controlled by a command and control block 32 separate and independent of the block 23 but synchronised with the block 23 itself via a synchronization block 33 of the unit 22.

The block 23 then controls the pump 20A as well.

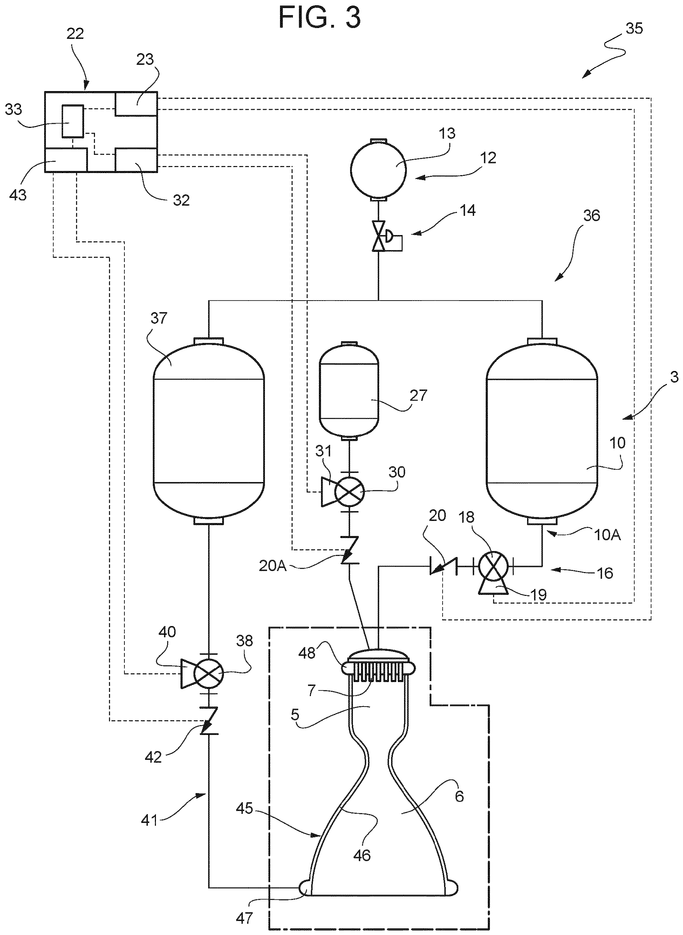

Figure 3 illustrates another rocket engine 35, which differs from the first rocket engine 25 in some components, and the constituent parts of which are distinguished, where possible, by the same numeric references as the corresponding parts of the first rocket engine 25.

The rocket engine 35 differs, in particular, from the rocket engine 25 due to the fact that it comprises a multipropellant supply assembly 36.

The first supply assembly 36 differs from the second supply assembly 3 due to the fact that it comprises, in addition to the tank 10, a second tank 37 containing a second propellant different to the propellant contained in the first tank 10. As in the first tank 10, the propellant of second tank 37 is also kept at a pressure basically equal to zero or at a pressure close to the vapour pressure of the second propellant.

Conveniently, the tanks 10 and 37 are connected in parallel to the pressurising assembly 12.

Alternatively, according to a variant not illustrated, each of the tanks 10, 37 is connected to a corresponding pressurising assembly that is separate from that of the other tank.

Like the propellant of the tank 10, the second propellant of the tank 37 is also dosed using a dosing rotary volumetric pump 38, for example, a screw pump, arranged downstream of the tank 38 in the forward direction of the propellant and driven by a corresponding electric or pneumatic motor 40.

The pump 38 sends the second propellant along a pipe 41 connecting the tank 37 to the injector nozzles 7, as will be better described below and, thus, to the combustion chamber 5.

In this embodiment too, downstream of the dosing pump 38, there is a check valve 42 and closure for preventing the return of the propellant or of the combustion products into the tank 37 as a result of pressure variations inside the combustion chamber 5 and for stopping the outflow of the propellant from the tank 37.

The drive motor 40 of the pump 38 is commanded and controlled by a command and control block 43 of the unit 22. Conveniently, the block 43 is independent of the blocks 23 and 32 and is synchronised with the blocks 23 and 32 by the synchronization block 33 and also controls the valve 42.

According to one variant, the check valve 42 is a passive valve, i.e., of the type comprising a thrust spring.

Again with reference to Figure 3, an outer side wall 45 of the combustion chamber 5 and of the nozzle 6 delimits an annular chamber 46. The chamber 46 may be divided into channels with different cross-sections with an axial, subvertical, or sub-horizontal orientation, may also be composed of several sections, each supplied by a different propellant or by the same propellant under different thermodynamic conditions. The chamber 46 has an inlet 47 connected to an outlet of the pipe 41 and an outlet 48 communicating with the injector nozzles represented by the nozzles 7. In this way, the propellant contained in the tank 37 traverses the chamber 46 before reaching the injector nozzles 7, heating up as it cools down the combustion chamber 5, exploiting the regeneration principle. It is possible that a fraction of the propellant that circulates in the chamber 46 flows into the combustion chamber from calibrated openings on the inner wall of the chamber itself, in order to locally increase the efficacy of the cooling through the insulating effect and the latent heat of vaporization of the liquid film generated by said inflow.

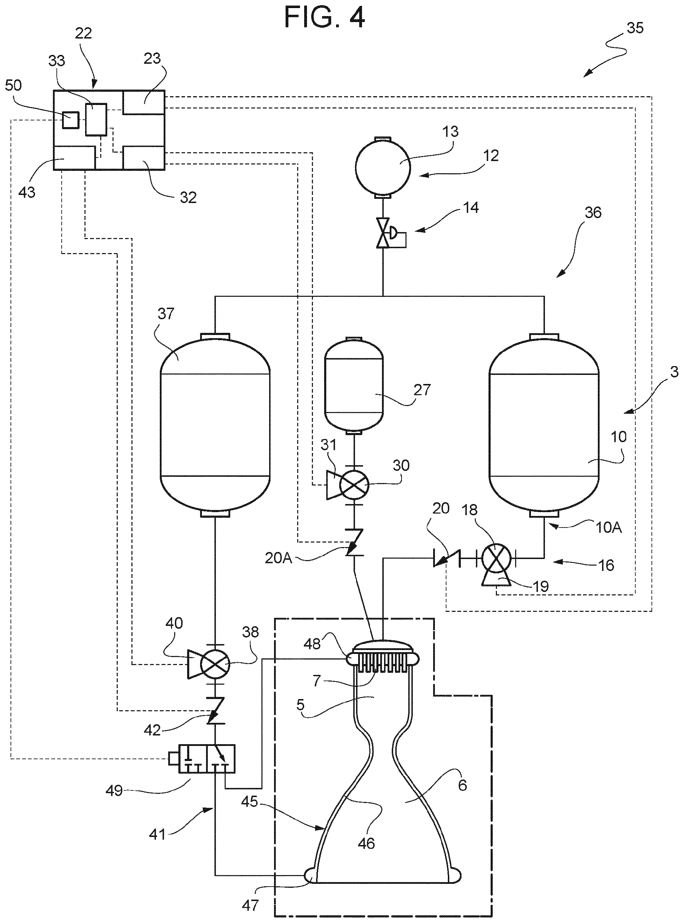

In the embodiment illustrated in Figure 4, between the check valve 42 and the inlet 47 of the annular chamber 46, there is a three-way by-pass valve 49 with two operational positions. The by-pass valve 49 is commanded by a block 50 by the unit 22 communicating with the synchronization block 33. The valve 49 makes it possible to selectively send the propellant of the tank 37 to the inlet 47 of the chamber 46 as in the solution in Figure 3, or to directly supply the second propellant to the combustion chamber 5 via the injector nozzles 7. In this way, the second propellant does not cross the chamber 46 and this ensures that the delay times between the command and injection of the second propellant into the combustion chamber 5 are significantly reduced, in the case of sporadic operation conditions with low Minimum Impulse Bit.

The process for generating thrust involves a preparatory step for conditioning various elements of the propulsion system, an activation step that includes the activation of the dosing rotary volumetric pump/s 18, 30, 38, according to a predefined cycle for the purpose of transferring, upstream of the injector nozzles 7, a precise flow of each of the propellants used, the opening of the check valves 20, 20A and 42, if present, that enables the injection of the propellants into the combustion chamber 5, and the ignition command (for non-hypergolic propellants or those subject to catalytic dissociation).

Ignition in the combustion chamber 5 may be obtained through the injection with a dosing rotary volumetric pump of a small quantity of a hypergolic or pyrophoric substance (for example, permanganate in aqueous solution or triethylaluminum-triethylborane), or through a small flow of hot gas inside the combustion chamber 5 that is electrically heated or through an electric arc generated between two electrodes struck by a mix of propellants.

As soon as the combustion is stabilised, you move to the step of managing and modulating the thrust in almost stationary conditions. In this step, the level of thrust, the pressure in the combustion chamber 5 and the mixing ratio around the operating point desired is obtained by varying, using the unit 22, the regulation of the flow of the dosing rotary volumetric pump/s, only controlling the rotation speed of the dosing pumps.

The control may be carried out with a feedback logic or open-loop logic.

At the end of the stationary operation, the switch-off transient starts. This is managed through the reduction in the flow of the rotary volumetric pump/s and stop, with timing to be kept for the switch-off transient, the mixing ratio, and the pressure and cooling conditions in the combustion chamber 5 so as to ensure the integrity of the system and the thrust profile. At the end of this step, the check valves 20, 20A and 42 present are closed by the unit 22, interrupting the flow of propellant inside the combustion chamber 5.

From the above, it is clear that the principle for controlling the thrust occurs according to this invention via the flow control of the propellant into the combustion chamber and not with a pressure control of the propellant, as in the known solutions.

The flow control is made possible by the use of dosing rotary volumetric pumps rotating the same in much smaller rotations than the rotations of conventional, centrifugal turbopumps and are advantageously applicable in all cases wherein a modest thrust (up to 10KN) is required and wherein the corresponding propellant flows can vary between a few grams/s and 5 kg/s.

In particular, the dosing rotary volumetric pumps (for example with multiple screws) enable the rigorous control of the propellant flow, defining the shape of the primary screw and imposing a certain rotation speed.

Under nominal operating conditions, the pressure variation downstream only affects the flow rate due to the inverse flow through the plays between the screws and the body of the pump: in the case of space applications (with a life cycle limited to a few minutes), the plays may be kept small by making the reflux losses insignificant and ensuring, thus, intrinsically the best control of the flow rates in the transient stage.

The advantages of an accurate control of the flow-rate in ignition and switching-of transitions are, first of all, the control of the thrust, with consequences for the dynamic stresses on the spacecraft, and the local mixing ratio, which is indispensable for the correct ignition and for the thermal integrity of the combustion chamber.

The use of dosing rotary volumetric pumps permits an accurate control of the flow-rate of the propellants in the thrust splitting and modulation steps. In addition to this, the use of dosing rotary volumetric pumps reduces the need for a high pressure drop through the injector nozzles, with a significant advantage for the size of the rocket engine and the supply system under maximum thrust conditions, or the possibility of greater thrust splitting. In fact, the irreversibility of a rotary volumetric pump and the limited plays make it practically impossible to spread a back-pressure generated in the combustion chamber to the supply assembly upstream or of a reflux towards the tanks.

In the multipropellant propulsion applications, the dosing rotary volumetric pumps, due to small losses via reflux, enable a direct correlation between the number of revolutions and actual flow rate of the propellants injected into the combustion chamber enabling the accurate control of the mixing ratio. The main advantages deriving from this accurate control are the reduction in thermal-structural stresses on the combustion chamber avoiding mixing ratios that are richer in oxidants.

The correct supply ensured by a dosing rotary volumetric pump enables the injection into the combustion chamber of a suitable quantity of propellant/s, in mixing conditions such as to ensure its ignition.

In non-hypergolic systems, the exact phasing between the action of the above-mentioned dosing pumps and the ignition command enables the development of combustion in the transient stage, which distributes the minimum impulse compatible with the shape of the chamber. As mentioned, in these conditions, the risk of reflux along the supply system is limited by the irreversibility of the pump and by the limited plays associated with it. As a result, there is a strong reduction in the Minimum Impulse Bit.

In terms of constructing the components, the use of dosing rotary volumetric pumps enables the use of propellant tanks that are not, or only weakly, pressurised, since the prevalence compatible with the operating conditions of the combustion chamber 5 is ensured by the dosing rotary volumetric pumps, and not by the pressure within the main tanks, as in known solutions.

This is an advantage in different ways.

First of all, the structural ratio (inert mass of the propulsion system divided by the total mass including that of the propellants) is closely linked to the inert mass of the tanks, which is obviously strongly dependent on the operating pressure and the pressurising device mass. The use of rotary volumetric pumps enables the minimisation of the pressure inside the propellant tanks and, thus, the reduction in structure and, as a result, the weight thereof.

In addition, the low-pressure tanks may be produced with any shape and this enables the best use of the inner spaces of the vehicle, making the propulsion system compact, structurally optimised and easily integrated into a space craft.

Again, the ability of the volumetric rotary pumps to inject propellant at high pressure into the combustion chamber improves the specific impulse and makes the rocket engine more compact.

Compared to the use of alternative pumps, the rotary volumetric pumps significantly reduce, even eliminating, the pressure disturbances resulting from alternate pumping, enabling a more accurate control of the flow rate in transitions.

Finally, the dosing rotary volumetric pumps are basically immune to cavitation.

From the above, it is clear that changes may be made to the rocket engines described, and variations produced thereto.

In particular, the rocket engine 25 may not have the ignition device 26 for the propellant. In the same way, the rocket engines described could comprise different ignition devices from those indicated.

Finally, the supply assembly 3, 36 described could supply the liquid fuel into a combustion chamber wherein there is already a solid fuel (schematically illustrated with a dashed line in Figure 2) so as to be a hybrid propulsion system.

## Claims

1. A liquid propellant supply assembly (2) to supply a liquid propellant to a combustion chamber (5) of a space rocket engine (1), the assembly comprising at least one storage tank (10, 37) for at least one first liquid propellant, one or more dispensing injector nozzles (7) to dispense said first propellant into the combustion chamber (5) of said rocket engine (1), dispensing means arranged between said tank (10) and said injector nozzles (7) to dispense said first liquid propellant and a command and control unit (22) to control said dispensing means depending on a desired operating profile of said rocket engine (1), **characterized in that** said dispensing means comprise at least one dosing rotary volumetric pump (18) to dose said first propellant and **in that** said command and control unit (22) comprises a first command and control block configured to change the rotation speed of said dosing rotary volumetric pump (18) depending on said operating profile.

2. The assembly according to claim 1, **characterized in that** the first propellant, in said storage tank (10), is kept at a pressure that is substantially equal to zero or to its vapour pressure.

3. The assembly according to claim 1 or 2, **characterized in that** said dosing rotary volumetric pump (18) is a mass dosing screw pump.

4. The assembly according to any one of the preceding claims, **characterized in that** it comprises a catalytic dissociation block interposed between said injector nozzles (7) and said dosing rotary volumetric pump (18, 38) .

5. The assembly according to any one of the preceding claims, **characterized in that** it comprises at least one second containing tank (37) for a second liquid propellant different from said first liquid propellant; said dosing means further comprising at least on second dosing rotary volumetric pump (38) distinct from said first rotary pump (18) and interposed between said second tank (37) and said one or more injector nozzles (7); said command and control unit (22) comprising a second command and control block to control said second dosing rotary volumetric pump (38) depending on said desired operating profile.

6. The assembly according to claim 5, **characterized in that** said first and second command and control block are independent of one another and are configured to change the rotation speed of the first and of the second dosing rotary volumetric pump (18, 38), respectively, independently of one another; said command and control unit (22) further comprising a synchronization block for the synchronization of said first and second command and control block.

7. The assembly according to any one of the preceding claims, **characterized in that** it comprises an ignition device (26) to ignite said propellant inside said combustion chamber (5); said ignition device (26) comprising at least one third containing tank (27) for an ignition fluid for said liquid propellant and a third dosing rotary volumetric pump (30) interposed between said third tank (27) and said one or more injector nozzles (7); said command and control unit (22) comprising a third command and control block configured to control said third dosing rotary volumetric pump (30) depending on said operating profile.

8. The assembly according to any one of the preceding claims, **characterized in that** it comprises, for each dosing rotary volumetric pump (18, 30, 38), a respective closing valve (20, 20A, 42) arranged downstream of the relative dosing rotary volumetric pump (18, 30, 38).

9. The assembly according to any one of the preceding claims, **characterized in that** it comprises, for each tank (10, 37), pressurization means for the relative tank (10, 37).

10. A propulsion assembly of a rocket engine; the propulsion assembly comprising a combustion chamber (5) at least partially delimited by a side wall (45) provided with a passage for a cooling fluid for said side wall (45) having an inlet and an outlet communicating with said injector nozzles (7); the propulsion assembly further comprising a liquid propellant supply assembly (2) to supply a liquid propellant to said combustion chamber (5); **characterized in that** said supply assembly (2) is according to claim 5 and **in that** it comprises flow deflector means to deflect said second propellant received from said second dosing rotary volumetric pump (38) towards said injector nozzles (7) or towards the inlet of said passage for the cooling fluid.

11. The propulsion assembly according to claim 10, **characterized in that** it comprises an ignition device (26) to ignite the propellant inside said combustion chamber (5) controlled by said command and control unit (22); said ignition device (26) being as claimed in claim 7.
